# EUROPEAN PATENT SPECIFICATION

(11) **EP 4 387 202 B1**
(45) Date of publication and mention of the grant of the patent: **19.11.2025**
(21) Application number: 22929622.3
(22) Date of filing: 30.11.2022
(51) Int. Cl.: H04L 67/12, H04W 4/38, H04W 24/10, H04L 67/06, H04L 67/14, H04L 67/60, H04Q 9/00, H04W 76/10

(54) **PERCEPTION DATA REPORTING METHOD AND APPARATUS, INFORMATION GENERATION METHOD AND APPARATUS, COMPUTER-READABLE STORAGE MEDIUM, COMPUTER DEVICE AND COMPUTER PROGRAM PRODUCT**
VERFAHREN UND VORRICHTUNG ZUR MELDUNG VON WAHRNEHMUNGSDATEN, INFORMATIONSERZEUGUNGSVERFAHREN UND -VORRICHTUNG, COMPUTERLESBARES SPEICHERMEDIUM, COMPUTERVORRICHTUNG UND COMPUTERPROGRAMMPRODUKT
PROCÉDÉ ET APPAREIL D'ÉTABLISSMENT DE RAPPORT DE DONNÉES DE PERCEPTION, PROCÉDÉ ET APPAREIL DE GÉNÉRATION D'INFORMATIONS, SUPPORT DE STOCKAGE LISIBLE PAR ORDINATEUR, DISPOSITIF INFORMATIQUE ET PRODUIT-PROGRAMME INFORMATIQUE

(30) Priority: 03.03.2022 CN 202210204843
(43) Date of publication of application: 19.06.2024
(73) Proprietor: Tencent Technology (Shenzhen) Company Limited, Shenzhen, Guangdong, 518057 (CN)
(72) Inventor: ZHANG, Zhuoyun, Shenzhen, Guangdong 518057 (CN)
(74) Representative: Novagraaf International SA
(86) International application number: PCT/CN2022/135620
(87) International publication number: WO 2023/165195

(56) References cited:
- CN-A- 110 769 455
- CN-A- 112 104 464
- CN-A- 113 038 590
- US-A1- 2017 005 911
- US-A1- 2021 258 258
- APPLE: "Solution for KI#8 and KI#9: UE sensor data analytics for network improvements and optimisation", 3GPP TSG-SA WG2 MEETING #13X S2-20XXXX, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 7 May 2020 (2020-05-07), Mobile Competence Centre ; 650, route des Lucioles ; F-06921 Sophia-Antipolis Cedex ; France, pages 1 - 4, XP009549253

## Description

### FIELD OF THE TECHNOLOGY

This application relates to the field of communications technologies, and more specifically, to a sensing data reporting method and apparatus, an information generation method and apparatus, a computer-readable storage medium, a computer device, and a computer program product.

### BACKGROUND OF THE DISCLOSURE

With the development of the terminal technologies, terminal devices can not only communicate with a network based on the existing communication technologies, but also can sense their own information and ambient information around the terminal devices. However, at present, a solution of reporting sensing data of a terminal usually adopts an application layer reporting solution, that is, the sensing data is transparently transmitted to a service server directly, and collaborative processing and utilization of the sensing data by a mobile network cannot be implemented. Related technologies can be found at least in patent documents US2017/005911A1 and US2021/258258A1.

### SUMMARY

Embodiments of this application provide a sensing data reporting method and apparatus, an information generation method and apparatus, a computer-readable storage medium, a computer device, and a computer program product, which can report sensing data of user equipment (UE) to a mobile network, so that a mobile network can obtain the sensing data, and that the mobile network can implement collaborative processing and utilization of the sensing data.

The present invention is set out in the appended set of claims.

The embodiments of this application provide a sensing data reporting method, and by obtaining sensing data request information transmitted by a control network element, establishing a communication session according to a user equipment route selection policy in a case that the communication session is not established between a terminal device and a target network element, and reporting target sensing data to the target network element by using the communication session, sensing data of UE can be reported to a mobile network, so that the mobile network implements obtaining of the sensing data, and that the mobile network can implement collaborative processing and utilization of the sensing data.

### BRIEF DESCRIPTION OF THE DRAWINGS

FIG. 1 is a schematic architecture diagram of a sensing data reporting system according to an embodiment of this application.
FIG. 2 is a schematic flowchart of a sensing data reporting method according to an embodiment of this application.
FIG. 3 is a schematic flowchart of an information generation method according to an embodiment of this application.
FIG. 4 is a schematic flowchart of a sensing data obtaining method according to an embodiment of this application.
FIG. 5 is a schematic block diagram of a sensing data reporting apparatus according to an embodiment of this application.
FIG. 6 is a schematic block diagram of an information generation apparatus according to an embodiment of this application.
FIG. 7 is a schematic block diagram of a sensing data obtaining apparatus according to an embodiment of this application.
FIG. 8 is a schematic block diagram of a computer device according to an embodiment of this application.

### DESCRIPTION OF EMBODIMENTS

The following describes the technical solutions in the embodiments of this application with reference to the accompanying drawings in the embodiments of this application.

The embodiments of this application provide a sensing data reporting method and apparatus, an information generation method and apparatus, a computer-readable storage medium, a computer device, and a computer program product. The embodiments of this application can be applied to various scenarios such as 5G, cloud technology, and intelligent transportation.

First, some nouns or terms appearing in the embodiments of this application described in the process are explained in the following:

The 5^{th} generation mobile communication technology (5^{th} Generation Mobile Communication Technology, 5G) is a new generation of broadband mobile communication technology having characteristics of high speed, low delay, and big connection, and is the network infrastructure for implementing the interconnection of man, machine, and things.

The 3^{rd} Generation Partnership Project (3GPP) aims to implement smooth transition from the 2G network to the 3G network, to ensure backward compatibility of the future technologies, and support easy network construction and roaming and compatibility between systems. The 3GPP mainly formulates the specifications of the 3^{rd} generation technology based on the global system for mobile communications (GSM) core network and using the UTRA (FDD is a W-CDMA technology and TDD is a TD-SCDMA technology) as a wireless interface.

A user equipment route selection policy (URSP) rule is defined in the 3GPP 5G protocols. There are two groups of important parameters in the URSP rule, one group includes traffic descriptor parameters, including parameters such as data network names (DNN), IP triples (IP Descriptor), domain name descriptors (Domain Descriptor), and connection capabilities. The other group includes route selection descriptors (RSD), including parameters such as single network slice selection assistance information (S-NSSAI), session and service continuity modes (SSC Mode), and DNNs. The URSP rule in fact refers to a plurality of correspondences between traffic descriptors and route selection descriptors.

A policy control function (PCF) is a 5G core network element that provides all mobility, user equipment access selection, and PDU session-related policies for which the PCF is responsible.

A protocol data unit (PDU) session is a process of communication between user equipment (UE) and a data network (DN). After a PDU session is established, a data transmission channel between the UE and the DN is established.

A user plane management function (UPF) is a user plane function entity with the main function of being responsible for routing and forwarding of data packets and QoS flow mapping.

Encapsulation: Data needs to be transmitted layer by layer from an upper layer to a lower layer in a case of needing to be transmitted via a network. In a case that a host needs to transmit data to another host, the data needs to be packaged into a special protocol data packet at the transmitting end and header information is added layer by layer. This process is called encapsulation.

Decapsulation: Data is transmitted to a receiving device, and the receiving device needs to delete the added information, and decides, according to the header, to upload the data to an appropriate application along a protocol stack. This process is called decapsulation.

Intelligent transportation is a new generation of information technologies which make full use of Internet of Things, spatial sensing, cloud computing, the mobile Internet, and the like in the entire transportation field, and comprehensively uses theories and tools such as transportation science, system methods, artificial intelligence, and knowledge mining. With the goal of full sensing, in-depth integration, active service, and scientific decision-making, by constructing a real-time dynamic information service system, to perform in-depth mining of transportation-related data, so as to form a problem analysis model, the improvement of industry resource configuration optimization capabilities, public decision-making capabilities, industry management capabilities, and public service capabilities is implemented, and safer, more efficient, more convenient, more economical, more environmentally friendly, and more comfortable operation and development of traffic and transportation are promoted, thereby driving the transformation and upgrading of the traffic and transportation-related industries.

Cloud technology refers to a hosting technology that unifies series of resources such as hardware, software, and network in a wide area network or a local area network, to implement computing, storage, processing, and sharing of data. The cloud technology is a generic term for a network technology, an information technology, an integration technology, a management platform technology, an application technology, and the like applied based on a cloud computing commercial mode, and can form a resource pool, which is used on demand and is flexible and convenient. The cloud computing technology is to become an important support. Backend services of a technology network system require a huge amount of computing and storage resources, such as video websites, image websites, and more portal websites. Accompanied with the high-level development and application of the Internet industry, every item may have its own identification mark in the future, which needs to be transmitted to a backend system for logical processing. Data at different levels may be processed separately, and various types of industry data require strong system back support, which can only be implemented through cloud computing.

Blockchain system: A blockchain system may be a distributed system formed by connecting clients and a plurality of nodes (a computing device in any form in an access network, for example, a server and user equipment) through network communication. A peer to peer (P2P) network is formed between nodes. A P2P protocol is an application layer protocol running above a Transmission Control Protocol (TCP) protocol. In a distributed system, any machine such as a server or a terminal may join and become a node. Nodes include a hardware layer, an intermediate layer, an operating system layer, and an application layer.

The embodiments of this application may be implemented in combination with a cloud technology or a blockchain network technology. In the sensing data reporting method disclosed in the embodiments of this application, these data may be stored on a blockchain.

For example, target sensing data, a user equipment route selection policy, and a data packet can all be stored on a blockchain. To facilitate storage and query of the target sensing data, the user equipment route selection policy, and the data packet, for example, the sensing data reporting method further includes: transmitting the target sensing data, the user equipment route selection policy, and the data packet to a blockchain network, so that a node of the blockchain network fills the target sensing data, the user equipment route selection policy, and the data packet into a new block, and in a case that a consensus is reached on the new block, the new block is added to the tail of the blockchain. In the embodiments of this application, the target sensing data, the user equipment route selection policy, and the data packet may be stored in a chain, so as to implement backup of a record.

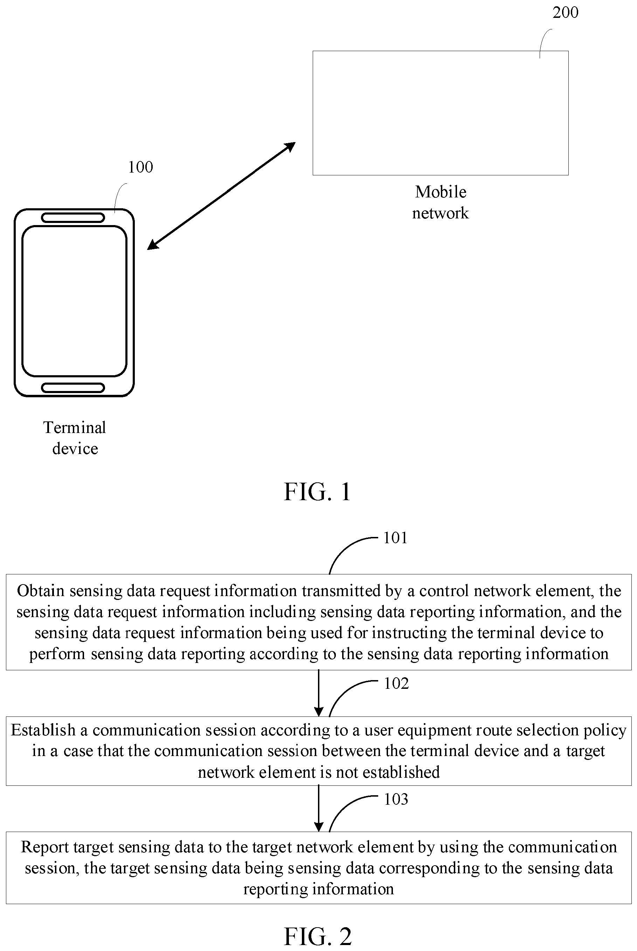

FIG. 1 is a schematic architecture diagram of a sensing data reporting system according to an embodiment of this application. The sensing data reporting system includes a terminal device 100 and a mobile network 200.

The terminal device 100 may also be referred to as user equipment (UE), an access terminal, a subscriber unit, a subscriber station, a mobile station, a mobile platform, a remote station, a remote terminal, a mobile device, a user terminal, a terminal, a wireless communications device, a user agent, a user apparatus, or the like. The terminal device 100 may be a device such as a smart phone, a tablet personal computer, a laptop computer, a personal digital assistant (PDA), a mobile Internet device (MID), a wearable device, or an in-vehicle device. The mobile network 200 may include a core network (CN) and a radio access network (RAN). The mobile network 200 may include a target network element for obtaining sensing data. In this embodiment of this application, the core network may include: a core network device, a core network function, and a core network element, such as a mobility management entity (MME), an access management function (AMF), a session management function (SMF), a user plane function (UPF), a policy control function (PCF), and the like. Network elements or network functions included in different generations of mobile communication core networks may be different.

In this embodiment of this application, the radio access network may include: a radio access network device, a radio access network node, a non-3GPP radio access network, a centralized unit (CU), a distributed unit (DU), a base station, an evolved node B (eNB), a 5G base station (gNB), a radio network controller (RNC), a base station (NodeB), a non-3GPP inter working function (N3IWF), an access controller (AC) node, an access point (AP) device, or a wireless local area networks (WLAN) node.

In this embodiment of this application, during sensing data reporting, the terminal device 100 may be configured to: obtain sensing data request information transmitted by a control network element, the sensing data request information including sensing data reporting information, and the sensing data request information being used for instructing the terminal device to perform sensing data reporting according to the sensing data reporting information; establish a communication session according to a user equipment route selection policy in a case that the communication session between the terminal device and a target network element is not established; and report target sensing data to the target network element by using the communication session, the target sensing data being sensing data corresponding to the sensing data reporting information.

In this embodiment of this application, the mobile network 200 may be configured to: generate sensing data request information, the sensing data request information being used for instructing the terminal device 100 to perform sensing data reporting according to the sensing data reporting information; generate a user equipment route selection policy, the user equipment route selection policy being used for instructing the terminal device to establish a communication session for the sensing data reporting, and the user equipment route selection policy including address information of the target network element; and transmit the sensing data request information and the user equipment route selection policy to the terminal device 100.

Detailed descriptions are provided below separately. A description order of the following embodiments is not used as a limitation on the priority order of the embodiments.

FIG. 2 is a schematic flowchart of a sensing data reporting method according to an embodiment of this application. The sensing data reporting method is applied to a terminal device, the terminal device may be a device such as a smart phone or a wearable device, and the method includes step 101 to step 103. Descriptions are in the following:

Step 101: Obtain sensing data request information transmitted by a control network element, the sensing data request information including sensing data reporting information, and the sensing data request information being used for instructing the terminal device to perform sensing data reporting according to the sensing data reporting information.

In this embodiment, the mobile network includes a core network (CN) and a radio access Network (RAN). In a case that the mobile network needs to obtain sensing data, the control network element may transmit the sensing data request information to the terminal device. The sensing data request information may include the sensing data reporting information. The terminal device may perform sensing data report according to the sensing data reporting information in the sensing data request information.

Step 102: Establish a communication session according to a user equipment route selection policy in a case that the communication session between the terminal device and a target network element is not established.

The target network element is a network element that obtains the sensing data. For example, a function of obtaining sensing data may be defined in a particular network element. For example, in a case that the function of obtaining sensing data is defined in a UPF network element, the target network element is the UPF network element, and in a case that the function of obtaining sensing data is defined in a mobile core network control plane network element PCF, the target network element is the PCF network element. Alternatively, a specific network element for obtaining sensing data may be deployed in the mobile network, and the target network element is the specific network element.

For ease of understanding, in this application, a 5G network architecture is used as an example to describe the sensing data reporting method provided in this embodiment of this application. In a subsequent network evolution process, for example, in a 6G or 7G communication network, the sensing data reporting method provided in this embodiment of this application may also be used.

In this embodiment, the method may further include: obtaining a user equipment route selection policy transmitted by the control network element.

The user equipment route selection policy is generated by the control network element and is transmitted to the terminal device, and the terminal device may determine a parameter of a communication session according to the user equipment route selection policy. For example, in a 5G core network, the control network element may be a PCF network element.

In this embodiment, the method may further include: transmitting first sensing capability identification information to the control network element in a case that the terminal device has a self-sensing capability.

The first sensing capability identification information is information used for representing that the terminal device has a self-sensing capability.

The terminal device may determine, according to the self-sensing capability, whether the sensing data reporting is supported, and transmit identification information that can indicate the self-sensing capability to the PCF network element, and the PCF network element may determine, according to the identification information, whether to transmit the user equipment route selection policy to the terminal device. In a case that the terminal device does not have a self-sensing capability, the PCF network element does not need to transmit the user equipment route selection policy to the terminal device, thereby avoiding a waste of network communication resources.

For example, in a case that the terminal device is provided with a sensing apparatus (for example, a camera or a laser radar) having a sensing data acquisition capability, it is determined that the terminal device supports sensing data reporting; in a case that the terminal device is not provided with a sensing apparatus having a sensing data acquisition capability, it is determined that the terminal device does not support sensing data reporting. The terminal device may transmit indication information (that is, the first sensing capability identification information) which representing the self-sensing capability to the mobile network, for example, may transmit the indication information to the mobile network in a mobile network registration process, or may transmit the indication information to the mobile network in a location update process or a session management process.

For example, first sensing capability identification information for representing that the terminal device has the self-sensing capability and second sensing capability identification information for representing that the terminal device does not have the self-sensing capability are defined. For example, the first sensing capability identification information may be "support" and the second sensing capability identification information may be "not support". In a case that the control network element receives "support", it is considered that the corresponding terminal device supports the sensing data reporting; and in a case that the control network element receives "not support", it is considered that the corresponding terminal device does not support the sensing data reporting. Still for example, only the first sensing capability identification information representing that the terminal device has the self-sensing capability may be defined. In a case that the control network element receives the first sensing capability identification information, it indicates that the corresponding terminal device supports the sensing data reporting, and otherwise, it indicates that the terminal device does not support the sensing data reporting.

In some embodiments, the method may further include: in a case that the terminal device has the self-sensing capability, displaying a prompt dialog box, where the prompt dialog box includes a prompt area and a selection area, the prompt area is used for querying whether sensing data uploading is supported, and the selection area is used for selection by a user; in a case that the user selects to support the sensing data reporting, transmitting the first sensing capability identification information to the control network element and receiving the user equipment route selection policy returned by the control network element.

Considering the personal will and privacy security of a terminal user, in a case that the terminal device has a self-sensing capability, a prompt dialog box may be displayed first to query the opinion of the user. In a case that the user agrees to perform the sensing data reporting, the first sensing capability identification information is transmitted to the control network element, and a user equipment route control policy returned by the control network element is received.

In a case that the user selects to support the sensing data reporting, a second prompt dialog box may also be displayed. The second prompt dialog box displays a plurality of sensing data types, and each sensing data type corresponds to a check box. The user may select a reported sensing data type by checking the check box corresponding to the sensing data type. In this way, more refined sensing data reporting can be implemented. The method further includes: determining target sensing data according to the sensing data type checked by the user. For example, in a case that the user does not check location information, the terminal device cannot report the location information to the target network element.

For example, in a 5G core network, the control network element may be a PCF network element. After receiving first sensing capability identification information, the PCF network element determines that the terminal device supports the sensing data reporting, and a corresponding user equipment selection policy is generated. In some embodiments, a sensing data parameter may be added to the traffic descriptor parameter in the URSP rule. In addition, the PCF network element determines destination address information of the sensing data reporting and fills same into IP descriptors and/or non-IP descriptors. Then, a route selection of the sensing data is defined in the route selection descriptor of the URSP rule. Specifically, in a case that the destination address information is filled into the IP descriptors, the route in the RSD is selected to be an IP type. In a case that the destination address information is filled into the non-IP descriptors, the PDU session type in the RSD is selected to be "Ethernet" or a type by which "a type of interaction between the UE and the data network is unstructured to the 5G network".

In some embodiments, foregoing step 102 may be implemented in the following manner: establishing a communication session according to address information of the target network element included in the user equipment route selection policy; or establishing a communication session according to virtual address information of the target network element included in the user equipment route selection policy.

In a case that there is sensing data in the traffic descriptor parameter, at least one of the IP descriptors and the non-IP descriptors includes destination address information. In other words, the destination address information for the terminal device to report the sensing data and a type of a session for reporting data supported by the network need to be included. The destination address information is address information of a network element for acquiring sensing data. For example, in a case that the sensing data is acquired by a UPF, address information for identifying the UPF is filled in; and in a case that the sensing data information is acquired by a control plane network element for specific sensing data acquisition deployed in the network, the address information for identifying the control plane network element for sensing data acquisition is filled in.

Considering the protection of the internal address information of a network, written destination address information can be virtual address information, and a mapping relationship between the virtual address information and corresponding real address information may be stored in the network in advance, so that a network element inside the mobile network performs mapping between the virtual address information and the corresponding real address information according to the mapping relationship between the virtual address information and the corresponding real address information, so as to determine address information of a target network element, and transmit sensing data to the corresponding target network element of the real address information.

A PDU session is a data transmission channel between a terminal device and a mobile network. Therefore, in a case that the terminal device needs to report sensing data and the PDU session between the terminal device and the target network element is not established, the corresponding PDU session may be first established according to the URSP rule. In other words, a parameter of the PDU session is selected, and after the session establishment is completed, target sensing data is transmitted by using the PDU session.

Step 103: Report target sensing data to the target network element by using the communication session, the target sensing data being sensing data corresponding to the sensing data reporting information.

The terminal device may be provided with a sensing apparatus, for example, a camera, a laser radar, or a millimeter wave radar, for acquiring sensing data. The sensing data may include location information, speed information, acceleration information, temperature information, humidity information, wind information, surrounding event information, and the like.

For example, the sensing data reporting information may include at least one of a sensing data type, a reporting frequency of the sensing data, a maximum number of reporting times of the sensing data, a reporting start time of the sensing data, a reporting end time of the sensing data, or a reporting start condition of the sensing data, and the method further includes: generating target sensing data according to the sensing data reporting information.

The target network element is configured to receive the target sensing data reported by the terminal device by using the communication session between the terminal device and the target network element. For example, after the terminal device receives the sensing data request information, the terminal device may generate the target sensing data according to the sensing data reporting information. Then, the terminal device establishes a corresponding communication session according to the user equipment route selection policy, and reports the target sensing data to the target network element by using the communication session. After receiving the target sensing data, the target network element may implement collaborative processing and utilization of the sensing data.

In some embodiments, in a case that the sensing data reporting information includes the reporting start condition of the sensing data and the reporting start condition of the sensing data includes a preset threshold, the "generating target sensing data according to the sensing data reporting information" may include: generating the target sensing data in a case that the terminal device detects that self-sensing data exceeds the preset threshold.

In some embodiments, the preset threshold may be set to a critical value of a normal range of the sensing data. In a case that the terminal device detects that self-sensing data exceeds the normal range, the sensing data exceeding the normal range is determined to be the target sensing data and is reported to the target network element.

In some embodiments, in a case that the sensing data reporting information includes the sensing data type and the sensing data type includes ambient event data, the "generating target sensing data according to the sensing data reporting information" may include: generating the target sensing data in a case that the terminal device detects the ambient event data.

For example, the ambient event data refers to event information around the terminal device. For example, in a case that the terminal device is an in-vehicle terminal and the in-vehicle terminal detects road event information, for example, road event information such as road congestion information, road accident information, and vehicle retrograde information, the target sensing data is generated.

In some embodiments, in a case that the sensing data reporting information includes the reporting frequency of the sensing data, the "generating target sensing data according to the sensing data reporting information" may include: generating the target sensing data according to the reporting frequency of the sensing data.

For example, in a case that the reporting frequency is once per hour, the terminal device acquires sensing data once per hour and generates the target sensing data.

In this embodiment, the sensing data request may further carry a data reporting condition, and the "generating a data reporting instruction according to the sensing data reporting request" may further include: in a case that the sensing device of the terminal device detects that the self-sensing data meets the data reporting condition, generating the data reporting instruction.

For example, the data reporting condition may be at least one of the following: reporting in a case that a speed is greater than 50 km/h; starting data reporting in a case that humidity, temperature, and wind are greater than critical values; or reporting in a case that surrounding event data is detected.

In this embodiment, foregoing step 103 may be implemented in the following manner: encapsulating the target sensing data into a data packet according to the user equipment route selection policy; and transmitting the data packet to the target network element by using the communication session.

The data packet may be an IP packet or an Ethernet packet, and what type of data packet is specifically encapsulated into is determined according to information indicated by the IP descriptors and the non-IP descriptors in the traffic descriptors and capability information of the terminal device.

For example, in a case that the traffic descriptors includes only IP descriptors information, and the terminal device supports encapsulation into an IP data packet, the terminal device encapsulates the sensing data into an IP data packet, and a destination address of the data packet is destination address information in the IP descriptors in the traffic descriptors in the URSP.

For example, in a case that the traffic descriptors includes only non-IP descriptors information, and the terminal device supports encapsulation into a non-IP data packet, the terminal device encapsulates the sensing data into a non-IP data packet, and a destination address of the data packet is destination address information in the non-IP descriptors in the traffic descriptors in the URSP.

Still for example, in a case that the traffic descriptors include IP descriptors information and non-IP descriptors information, the terminal device determines, according to its own capability, to encapsulate the sensing data into one of an IP data packet or a non-IP data packet. In a case that the sensing data is encapsulated into an IP data packet, the destination address of the data packet is the destination address information in the IP descriptors; in a case that the sensing data is encapsulated into a non-IP data packet, the destination address of the data packet is the destination address information in the non-IP descriptors.

In this embodiment, the "transmitting the data packet to the target network element by using the communication session" may include: encrypting the data packet; and transmitting the encrypted data packet to the target network element by using the communication session.

In order to avoid the problem of data leakage caused by malicious interception of the sensing data, the data packet may be transmitted to the target network element after being encrypted. For example, the data packet may be encrypted using an encryption algorithms such as MDS, SHA-1, HMAC, DES/AES, RSA, and ECC.

In some embodiments, the method may further include: transmitting the target sensing data to the target network element by using the communication session in a case that the communication session between the terminal device and the target network element is established.

For example, in a case that a PDU session between the terminal device and the target network element is established, the target sensing data may be transmitted to the target network element by using the PDU session.

All of the foregoing technical solutions may be arbitrarily combined to form an optional embodiment of this application, and details are not described herein again.

In this embodiment of this application, by obtaining sensing data request information transmitted by a control network element, the sensing data request information including sensing data reporting information, and the sensing data request information being used for instructing the terminal device to perform sensing data reporting according to the sensing data reporting information, then establishing a communication session according to the user equipment route selection policy in a case that the communication session between the terminal device and the target network element is not established, and reporting target sensing data to a target network element by using the communication session, the target sensing data being sensing data corresponding to the sensing data reporting information, obtaining of the sensing data by a mobile network is implemented, and further collaborative processing and utilization of the sensing data by the mobile network is implemented.

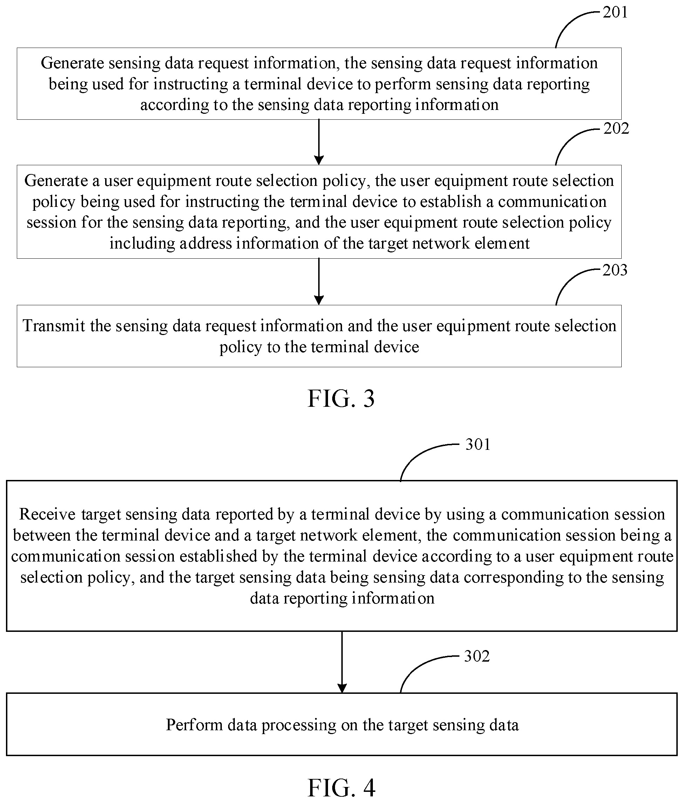

FIG. 3 is a schematic flowchart of an information generation method according to an embodiment of this application. For example, the method can be applied to a control network element. The method includes steps 201 to 203. Descriptions are in the following:

Step 201: Generate sensing data request information, the sensing data request information being used for instructing a terminal device to perform sensing data reporting according to the sensing data reporting information.

For example, the sensing data reporting information may include at least one of a sensing data type, a reporting frequency of the sensing data, a maximum number of reporting times of the sensing data, a reporting start time of the sensing data, a reporting end time of the sensing data, or a reporting start condition of the sensing data.

For example, the sensing data reporting information may include a reporting start condition of the sensing data, the reporting start condition of the sensing data may include a preset threshold, and the preset threshold may be set to a critical value of a normal range of the sensing data. Still for example, the sensing data reporting information may include a sensing data type, the sensing data type may include ambient event data, and the ambient event data refers to surrounding event information of the terminal device. Still for example, the sensing data reporting information may include a reporting frequency of the sensing data, for example, the reporting frequency is once per hour. Still for example, the sensing data request may further carry a data reporting condition. For example, the data reporting condition may be at least one of the following: reporting in a case that a speed is greater than 50 km/h; starting data reporting in a case that humidity, temperature, and wind are greater than critical values; or reporting in a case that ambient event data is detected.

Step 202: Generate a user equipment route selection policy, the user equipment route selection policy being used for instructing the terminal device to establish a communication session for the sensing data reporting, and the user equipment route selection policy including address information of the target network element.

For example, in a case that the mobile network detects that the terminal device initiates a mobile network registration process, the control network element may be instructed to generate sensing data request information and a user equipment route selection policy, and transmit the sensing data request information and the user equipment route selection policy to the terminal device. The target network element is a network element that obtains the sensing data.

For example, considering that the terminal device may not have a sensing capability, a waste of network communication resources may be caused in a case that a user equipment route selection policy is directly generated and transmitted to the terminal device. Therefore, in this embodiment, step 201 may include: determining address information of the target network element to which the terminal device performs the sensing data reporting in a case that the control network element receives the first sensing capability identification information transmitted by the terminal device.

The first sensing capability identification information is used for representing that the terminal device has a sensing capability.

In this embodiment, step 202 may include: adding a sensing data parameter to a traffic descriptor parameter of a preset user equipment route selection policy, and writing the address information of the target network element to the traffic descriptor parameter, so as to obtain the user equipment route selection policy.

For example, the preset user equipment route selection policy is a standard URSP rule. The control network element adds a sensing data parameter to the traffic descriptor parameter in the URSP rule. In addition, the PCF network element determines destination address information of the sensing data reporting and fills same into IP descriptors and/or non-IP descriptors. Then, a route selection of the sensing data is defined in the route selection descriptor of the URSP rule. For example, in a case that the destination address information is filled into the IP descriptors, the route in the RSD is selected to be an IP type. In a case that the destination address information is filled into the non-IP descriptors, the PDU session type in the RSD is selected to be "Ethernet" or a type by which "a type of interaction between the UE and the data network is unstructured to the 5G network".

In a case that there is sensing data in the traffic descriptor parameter, at least one of the IP descriptors and the non-IP descriptors includes destination address information. In other words, the destination address information for the terminal device to report the sensing data and a type of a session for reporting data supported by the network need to be included. The destination address information is address information of a network element for acquiring sensing data. For example, in a case that the sensing data is acquired by a UPF, address information for identifying the UPF is filled in; and in a case that the sensing data information is acquired by a control plane network element for specific sensing data acquisition deployed in the network, the address information for identifying the control plane network element for sensing data acquisition is filled in.

Considering the protection of the internal address information of a network, written destination address information can be virtual address information, and a network element in the mobile network performs mapping between the virtual address information and corresponding real address information, and transmits the sensing data to a network element of the real address information.

Step 203: Transmit the sensing data request information and the user equipment route selection policy to the terminal device.

For example, the control network element transmits the sensing data request information and the user equipment route selection policy to the terminal device, and the terminal device may determine the target sensing data according to the sensing data request information, establish a communication session with the target network element according to the user equipment selection policy, and report the target sensing data by using the communication session, so that obtaining of the sensing data by the mobile network can be implemented, and further collaborative processing and utilization of the sensing data by the mobile network is facilitated.

All of the foregoing technical solutions may be arbitrarily combined to form an optional embodiment of this application, and details are not described herein again.

In this embodiment of this application, by generating sensing data request information, the sensing data request information being used for instructing the terminal device to perform sensing data reporting according to the sensing data reporting information, then generating a user equipment route selection policy, the user equipment route selection policy being used for instructing the terminal device to establish a communication session for the sensing data reporting, and the user equipment route selection policy including address information of a target network element, and transmitting the sensing data request information and the user equipment route selection policy to the terminal device, so that the terminal device establishes a communication session with the target network element according to the user equipment route selection policy, and reports the sensing data to the target network element by using the communication session, thereby implementing obtaining of the sensing data by the mobile network, and further facilitating collaborative processing and utilization of the sensing data by the mobile network.

FIG. 4 is a schematic flowchart of a sensing data obtaining method according to an embodiment of this application. The sensing data obtaining method is applied to a target network element, and the method includes step 301 to step 302. Descriptions are in the following:

Step 301: Receive target sensing data reported by a terminal device by using a communication session between the terminal device and a target network element, the communication session being a communication session established by the terminal device according to a user equipment route selection policy, and the target sensing data being sensing data corresponding to the sensing data reporting information.

The target network element is a network element that obtains the sensing data. For example, a function of obtaining sensing data may be defined in a particular network element. For example, in a case that the function of obtaining sensing data is defined in a UPF network element, the target network element is the UPF network element. Alternatively, a specific network element for obtaining sensing data may be deployed in the mobile network, and the target network element is the specific network element.

For example, after receiving the sensing data request information, the terminal device may generate the target sensing data according to the sensing data reporting information; and then establish a corresponding communication session according to the user equipment route selection policy, and report the target sensing data to the target network element by using the communication session.

Step 302: Perform data processing on the target sensing data.

For example, after receiving the target sensing data, the target network element may form a sensing data set by using the target sensing data reported by the plurality of terminal devices and perform data processing on the sensing data set, so as to implement collaborative processing and utilization of the sensing data.

For example, in a case that the sensing data reporting information includes a sensing data type and the sensing data type includes ambient event data, the generated target sensing data may be sensing data generated in a case that the terminal device detects the ambient event data indicated in the sensing data reporting information. For example, the ambient event data refers to event information around the terminal device. For example, in a case that the terminal device is an in-vehicle terminal and the in-vehicle terminal detects ambient event data, the generated target sensing data packet includes the ambient event data. For example, in a case that the ambient event data is road event information, the generated target sensing data packet includes road event information such as road congestion information, road accident information, and vehicle retrograde information.

For example, the target network element establishes a communication connection with a plurality of in-vehicle terminals via a mobile network, the target network element receives the target sensing data, and may transmit the target sensing data to the other in-vehicle terminals through sensing collaboration, so as to implement collaborative processing of the sensing data.

In this embodiment of this application, by transmitting sensing data request information to a terminal device, the sensing data request information including sensing data reporting information, the sensing data request information being used for instructing the terminal device to report the sensing data according to the sensing data reporting information, and then receiving the target sensing data reported by the terminal device by using a communication session between the terminal device and a target network element, the communication session being a communication session established by the terminal device according to a user equipment route selection policy, the target sensing data being sensing data corresponding to the sensing data reporting information, obtaining of the sensing data by a mobile network is implemented, and further collaborative processing and utilization of the sensing data by the mobile network is implemented.

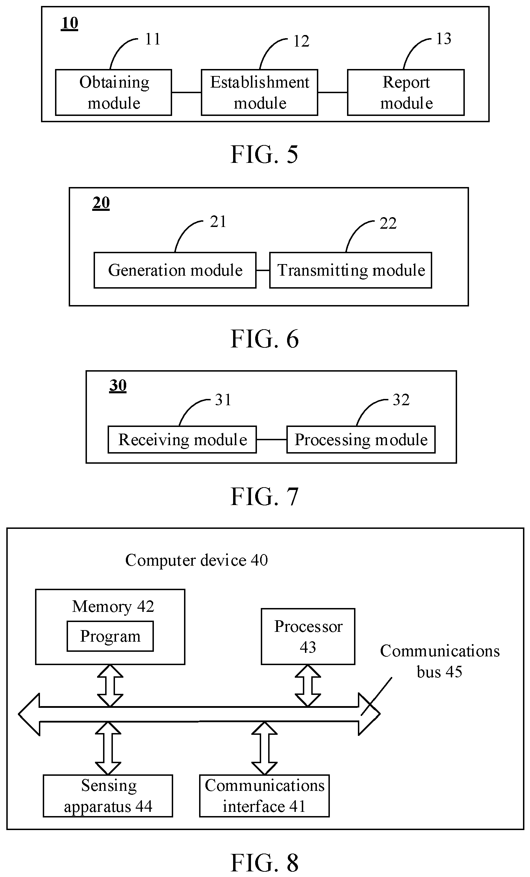

The method embodiments of this application are described in detail above, and the apparatus embodiments of this application are described in detail below with reference to FIG. 5 to FIG. 7. The apparatus embodiments correspond to the method embodiments, and similar descriptions may be referred to in the method embodiments.

FIG. 5 is a schematic structural diagram of a sensing data reporting apparatus 10 according to an embodiment of this application. As shown in FIG. 5, the sensing data reporting apparatus 10 may include:

an obtaining module 11, configured to obtain sensing data request information transmitted by a control network element, the sensing data request information including sensing data reporting information, and the sensing data request information being used for instructing the terminal device to perform sensing data reporting according to the sensing data reporting information;

an establishment module 12, configured to establish a communication session according to the user equipment route selection policy in a case that the communication session between the terminal device and a target network element is not established; and

a reporting module 13, configured to report target sensing data to the target network element by using the communication session, the target sensing data being sensing data corresponding to the sensing data reporting information.

For example, the obtaining module 11 may be further configured to obtain a user equipment route selection policy transmitted by the control network element.

For example, the establishment module 12 may be further configured to: establish a communication session according to address information of the target network element included in the user equipment route selection policy; or establish a communication session according to virtual address information of the target network element included in the user equipment route selection policy.

For example, the sensing data reporting apparatus 10 further includes a transmitting module, configured to: before obtaining the user equipment route selection policy transmitted by the control network element, transmit first sensing capability identification information to the control network element in a case that the terminal device has a self-sensing capability.

For example, the reporting module 13 may be further configured to: encapsulate the target sensing data into a data packet according to the user equipment route selection policy; and transmit the data packet to the target network element by using the communication session.

For example, the sensing data reporting information includes at least one of a sensing data type, a reporting frequency of the sensing data, a maximum number of reporting times of the sensing data, a reporting start time of the sensing data, a reporting end time of the sensing data, or a reporting start condition of the sensing data, and the sensing data reporting apparatus 10 may further include a generation module, configured to: generate target sensing data according to the sensing data reporting information.

For example, in a case that the sensing data reporting information includes the reporting start condition of the sensing data and the reporting start condition of the sensing data includes a preset threshold, the generation module may be further configured to: generate the target sensing data in a case that the terminal device detects that self-sensing data exceeds the preset threshold.

For example, in a case that the sensing data reporting information includes the sensing data type and the sensing data type includes ambient event data, the generation module may be further configured to: generate the target sensing data in a case that the terminal device detects the ambient event data.

For example, in a case that the sensing data reporting information includes the reporting frequency of the sensing data, the generation module may be further configured to: generate the target sensing data according to the reporting frequency of the sensing data.

For example, the reporting module 13 may be further configured to: transmit the target sensing data to the target network element by using the communication session in a case that the communication session between the terminal device and the target network element is established.

For the functions of the modules in the sensing data reporting apparatus 10 in this embodiment of this application, reference may be made to the specific implementations in the foregoing method embodiments, and details are not described herein again.

The modules in the sensing data reporting apparatus 10 may be implemented in whole or in part by software, hardware, and combinations thereof. The foregoing modules can be embedded in or independent from a processor in terminal device in form of hardware, or can be stored in a memory in terminal device in form of software, so that the processor invokes and performs operations corresponding to the foregoing modules.

In the sensing data reporting apparatus 10 provided in this embodiment of this application, the obtaining module 11 obtains sensing data request information transmitted by the control network element, the sensing data request information including the sensing data reporting information and the sensing data request information being used for instructing the terminal device to perform sensing data reporting according to the sensing data reporting information, then in a case that a communication session between the terminal device and the target network element is not established, the establishment module 12 establishes the communication session according to a user equipment route selection policy, and then the reporting module 13 reports the target sensing data to the target network element by using the communication session, the target sensing data being sensing data corresponding to the sensing data reporting information, so that the sensing data of the UE is reported to the mobile network, thereby implementing obtaining of the sensing data by the mobile network, and facilitating collaborative processing and utilization of the sensing data by the mobile network.

FIG. 6 is a schematic structural diagram of an information generation apparatus 20 according to an embodiment of this application. As shown in FIG. 6, the information generation apparatus 20 is applied to a control network element and may include:

a generation module 21, configured to generate sensing data request information, the sensing data request information being used for instructing a terminal device to perform sensing data report according to the sensing data reporting information; and generate a user equipment route selection policy, the user equipment route selection policy being used for instructing the terminal device to establish a communication session for the sensing data reporting, the user equipment route selection policy including address information of a target network element; and

a transmitting module 22, configured to transmit the sensing data request information and the user equipment route selection policy to the terminal device.

For example, the generation module 21 may be further configured to: add a sensing data parameter to a traffic descriptor parameter of a preset user equipment route selection policy, and write the address information of the target network element to the traffic descriptor parameter, so as to obtain the user equipment route selection policy.

For example, the information generation apparatus 20 further includes a determining module, configured to: determine the address information of the target network element to which the terminal device performs the sensing data reporting in case that the control network element receives first sensing capability identification information transmitted by the terminal device.

In the information generation apparatus 20 provided in this embodiment of this application, the generation module 21 generates sensing data request information, the sensing data request information being used for instructing the terminal device to perform sensing data reporting according to the sensing data reporting information, then the generation module 21 generates a user equipment route selection policy, the user equipment route selection policy being used for instructing the terminal device to establish a communication session for the sensing data reporting, and the user equipment route selection policy including address information of a target network element, and the transmitting module 22 transmits the sensing data request information and the user equipment route selection policy to the terminal device, so that the terminal device establishes a communication session with the target network element according to the user equipment route selection policy, and reports the sensing data to the target network element by using the communication session, thereby implementing obtaining of the sensing data by the mobile network, and further facilitating collaborative processing and utilization of the sensing data by the mobile network.

FIG. 7 is a schematic structural diagram of a sensing data obtaining apparatus 30 according to an embodiment of this application. As shown in FIG. 7, the sensing data obtaining apparatus 30 is applied to a target network element and may include:

a receiving module 31, configured to receive target sensing data reported by a terminal device by using a communication session between the terminal device and a target network element, the communication session being a communication session established by the terminal device according to a user equipment route selection policy, and the target sensing data being sensing data corresponding to the sensing data reporting information; and

a processing module 32, configured to perform data processing on the target sensing data.

In the sensing data obtaining apparatus 31 provided in this embodiment of this application, the receiving module 32 receives target sensing data reported by the terminal device by using a communication session between the terminal device and a target network element, the communication session being a communication session established by the terminal device according to a user equipment route selection policy, the target sensing data being sensing data corresponding to sensing data reporting information, and then the processing module 32 performs data processing on the target sensing data, so as to implement obtaining of the sensing data by a mobile network, and further facilitate collaborative processing and utilization of the sensing data by the mobile network.

In some embodiments, this application further provides a computer device, including a memory and a processor, the memory storing a computer program, and the processor, when executing the computer program, implementing the steps in the foregoing method embodiments.

FIG. 8 is a schematic block diagram of a computer device according to an embodiment of this application. The computer device may be the terminal shown in FIG. 1. As shown in FIG. 8, a computer device 40 may include a communications interface 41, a memory 42, a processor 43, a sensing apparatus 44, and a communications bus 45. The communications interface 41, the memory 42, the processor 43, and the sensing apparatus 44 communicate with each other by using the communications bus 45. The communications interface 41 is configured to perform data communication between the computer device 40 and an external device. The memory 42 may be configured to store a software program and a module, and the processor 43 runs the software program and the module stored in the memory 42, for example, the software program of the corresponding operation in the foregoing method embodiment, and the sensing apparatus 44 may be configured to detect sensing data.

In some embodiments, the sensing apparatus 44 may include at least one of the following: an acceleration sensor, a gyroscope, a temperature sensor, a humidity sensor, a camera, a laser radar, and a millimeter wave radar.

In some embodiments, the computer device 40 may further include an input interface. The processor 43 may control the input interface to communicate with other devices or chips, and may specifically obtain information or data transmitted by the other devices or chips.

In some embodiments, the computer device 40 may further include an output interface. The processor 43 may control the output interface to communicate with other devices or chips, and may specifically output information or data to the other devices or chips.

In some embodiments, the processor 43 may invoke the software program and the module stored in memory 42 to perform the following operations:

obtaining sensing data request information transmitted by a control network element, the sensing data request information including sensing data reporting information, and the sensing data request information being used for instructing the terminal device to perform sensing data reporting according to the sensing data reporting information; establishing a communication session according to a user equipment route selection policy in a case that the communication session between the terminal device and a target network element is not established; and reporting target sensing data to the target network element by using the communication session, the target sensing data being sensing data corresponding to the sensing data reporting information.

In some embodiments, the processor 43 may also invoke the software program and the module stored in memory 42 to perform the following operations:

generating sensing data request information, the sensing data request information being used for instructing the terminal device to perform sensing data reporting according to the sensing data reporting information; generating a user equipment route selection policy, the user equipment route selection policy being used for instructing the terminal device to establish a communication session for the sensing data reporting, and the user equipment route selection policy including address information of the target network element; and transmitting the sensing data request information and the user equipment route selection policy to the terminal device.

An embodiment of this application further provides a computer-readable storage medium, configured to store a computer program. The computer-readable storage medium can be applied to a computer device, and the computer program enables the computer device to execute a corresponding process in the sensing data reporting method in the embodiments of this application. For simplicity, details are not described herein again.

An embodiment of this application further provides a computer program product. The computer program product includes computer instructions, stored in a computer-readable storage medium. A processor of the computer device reads the computer instructions from the computer-readable storage medium, and the processor executes the computer instructions, so that the computer device performs the corresponding process in the sensing data reporting method in the embodiments of this application. For simplicity, details are not described herein.

An embodiment of this application further provides a computer program. The computer program includes computer instructions, stored in a computer-readable storage medium. A processor of the computer device reads the computer instructions from the computer-readable storage medium, and the processor executes the computer instructions, so that the computer device performs the corresponding process in the sensing data reporting method in the embodiments of this application. For simplicity, details are not described herein.

The processor in this embodiment of this application may be an integrated circuit chip, and has a signal processing capability. In an implementation process, steps of the foregoing method embodiments may be implemented by using an integrated logic circuit of hardware in the processor, or by instructions in form of software. The processor may be a general-purpose processor, a digital signal processor (DSP), an application specific integrated circuit (ASIC), a field-programmable gate array (FPGA), or other programmable logic devices, discrete gate or transistor logic devices, and discrete hardware components, or may implement or perform the methods, the steps, and logic block diagrams that are disclosed in the embodiments of this application. The general-purpose processor may be a microprocessor, or the processor may be any conventional processor or the like. The steps in the methods disclosed with reference to the embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps of the methods in combination with hardware of the processor.

It may be understood that the memory in the embodiments of this application may be a volatile memory or a non-volatile memory, or may include both a volatile memory and a non-volatile memory. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. Through illustrative and not restrictive description, RAMs in many forms can be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory of the system and method described herein aims to include but not limited to these memories and any other suitable types of memories.

It may be understood that the memories are illustrative and not restrictive descriptions. For example, the memory in the embodiments of this application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). In other words, the memory in this embodiment of this application aims to include but is not limited to these memories and any other suitable type of memory.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art can clearly understand that for convenience and conciseness of description, for specific working processes of the foregoing systems, apparatuses, and units, reference may be made to the corresponding processes in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of this embodiment.

In addition, functional units in the embodiments of this application may be integrated into one processing unit, or each of the units may be physically separated, or two or more units may be integrated into one unit.

In addition, functional units or modules in the embodiments of this application may be integrated into one processing unit or module, or each of the units or modules may be physically separated, or two or more units may be integrated into one unit, or two or more modules may be integrated into one module.

In a case that the function is implemented in the form of a software functional unit and sold or used as an independent product, the function may be stored in a computer-readable storage medium. Based on such an understanding, the technical solutions of this application essentially, or the part contributing to the related technology, or some of the technical solutions may be implemented in form of a software product. The computer software product is stored in a storage medium and includes several instructions for instructing a computer device (which may be a personal computer or a server) to perform all or some of the steps of the methods described in the embodiments of this application. The foregoing storage medium includes: various mediums capable of storing program codes, such as a USB flash drive, a removable hard disk, a ROM, an RAM, a magnetic disk, or an optical disc.

Although the invention has been explained in relation to its preferred embodiment(s) as mentioned above, it is to be understood that many other possible modifications and variations can be made without departing from the scope of the present invention, which is defined by the claims.

## Claims

1. A sensing data reporting method, performed by a user equipment, the method comprising:
obtaining (101) sensing data request information transmitted by a control network element, the sensing data request information comprising sensing data reporting information, and the sensing data request information being used for instructing the user equipment to report target sensing data generated by the user equipment according to the sensing data reporting information;
establishing (102) a communication session according to a user equipment route selection policy in a case that the communication session between the user equipment and a target network element is not established; and
reporting (103) the target sensing data to the target network element by using the communication session, the target sensing data being sensing data corresponding to the sensing data reporting information, wherein the target network element is a user plane function, UPF, network element, or a policy control function, PCF, network element,
wherein the method further comprises:
obtaining the user equipment route selection policy transmitted by the control network element, wherein the user equipment route selection policy is generated by adding a sensing data parameter to a traffic descriptor parameter of a preset user equipment route selection policy, and writing the address information of the target network element and a type of the communication session for the reporting of the target sensing data to the traffic descriptor parameter.

2. The sensing data reporting method according to claim 1, wherein the establishing a communication session according to a user equipment route selection policy comprises:
establishing the communication session according to address information of the target network element comprised in the user equipment route selection policy; or
establishing the communication session according to virtual address information of the target network element comprised in the user equipment route selection policy.

3. The sensing data reporting method according to claim 1, wherein before the obtaining the user equipment route selection policy transmitted by the control network element, the method further comprises:
transmitting first sensing capability identification information to the control network element in a case that the user equipment has a self-sensing capability.

4. The method according to claim 3, wherein before the transmitting first sensing capability identification information to the control network element, the method further comprises:
displaying a prompt dialog box, wherein the prompt dialog box comprises a prompt area and a selection area, and the prompt area is used for querying whether sensing data uploading is supported; and
performing a process of transmitting the first sensing capability identification information to the control network element in response to that a selection operation for supporting sensing data reporting is received in the selection area.

5. The sensing data reporting method according to claim 1, wherein the reporting target sensing data to the target network element by using the communication session comprises:
encapsulating the target sensing data into a data packet according to the user equipment route selection policy; and
transmitting the data packet to the target network element by using the communication session.

6. The sensing data reporting method according to claim 1, wherein the sensing data reporting information comprises at least one of a sensing data type, a reporting frequency of the sensing data, a maximum number of reporting times of the sensing data, a reporting start time of the sensing data, a reporting end time of the sensing data, or a reporting start condition of the sensing data; and
the method further comprises: generating the target sensing data according to the sensing data reporting information.

7. The sensing data reporting method according to claim 6, wherein in a case that the sensing data reporting information comprises the reporting start condition of the sensing data, and the reporting start condition of the sensing data comprises a preset threshold, the generating the target sensing data according to the sensing data reporting information comprises:
generating the target sensing data in a case that the user equipment detects that self-sensing data exceeds the preset threshold,
and wherein in a case that the sensing data reporting information comprises the sensing data type and the sensing data type comprises ambient event data, the generating the target sensing data according to the sensing data reporting information comprises:
generating the target sensing data in a case that the user equipment detects the ambient event data,
and wherein in a case that the sensing data reporting information comprises the reporting frequency of the sensing data, the generating the target sensing data according to the sensing data reporting information comprises:
generating the target sensing data according to the reporting frequency of the sensing data.

8. The sensing data reporting method according to claim 1, wherein the method further comprises:
transmitting the target sensing data to the target network element by using the communication session in a case that the communication session between the user equipment and the target network element is established.

9. An information generation method, performed by a control network element, the method comprising:
generating (201) sensing data request information, the sensing data request information being used for instructing a user equipment to report target sensing data generated by the user equipment according to the sensing data reporting information;
generating (202) a user equipment route selection policy, the user equipment route selection policy being used for instructing the user equipment to establish a communication session for the sensing data reporting, and the user equipment route selection policy comprising address information of a target network element, wherein the target network element is a user plane function, UPF, network element, or a policy control function, PCF, network element; and
transmitting (203) the sensing data request information and the user equipment route selection policy to the user equipment,
wherein the generating a user equipment route selection policy comprises:
adding a sensing data parameter to a traffic descriptor parameter of a preset user equipment route selection policy, and writing the address information of the target network element and a type of the communication session for the reporting of the target sensing data to the traffic descriptor parameter, so as to obtain the user equipment route selection policy.

10. The information generation method according to claim 9, further comprising:
determining the address information of the target network element to which the user equipment performs the sensing data reporting in a case that the control network element receives first sensing capability identification information transmitted by the user equipment.

11. A computer-readable storage medium having stored thereon a computer program, and the computer program being suitable for being loaded by a processor, to perform the sensing data reporting method according to any one of claims 1 to 8 or the information generation method according to any one of claims 9 and 10.

12. A user equipment, comprising a processor and a memory, the memory storing a computer program, and the processor being configured to invoke the computer program stored in the memory to perform the sensing data reporting method according to any one of claims 1 to 8.

13. A control network element, comprising a processor and a memory, the memory storing a computer program, and the processor being configured to invoke the computer program stored in the memory to perform the information generation method according to any one of claims 9 and 10.

## Patentansprüche

1. Erfassungsdatenmeldeverfahren, das von einer Teilnehmereinrichtung durchgeführt wird, wobei das Verfahren Folgendes umfasst:
Erhalten (101) von Erfassungsdatenanforderungsinformationen, die von einem Steuernetzwerkelement übertragen werden, wobei die Erfassungsdatenanforderungsinformationen Erfassungsdatenmeldeinformationen umfassen, und wobei die Erfassungsdatenanforderungsinformationen zum Anweisen der Teilnehmereinrichtung, Zielerfassungsdaten zu melden, die von der Teilnehmereinrichtung gemäß den Erfassungsdatenmeldeinformationen erzeugt werden, verwendet werden;
Aufbauen (102) einer Kommunikationssitzung gemäß einer Teilnehmereinrichtungsroutenauswahlrichtlinie in einem Fall, in dem die Kommunikationssitzung zwischen der Teilnehmereinrichtung und einem Zielnetzwerkelement nicht aufgebaut ist; und
Melden (103) der Zielerfassungsdaten beim Zielnetzwerkelement unter Verwendung der Kommunikationssitzung, wobei die Zielerfassungsdaten Erfassungsdaten sind, die den Erfassungsdatenmeldeinformationen entsprechen, wobei das Zielnetzwerkelement ein Benutzerebenenfunktions(UPF)-Netzwerkelement oder ein Richtliniensteuerfunktions(PCF)-Netzwerkelement ist,
wobei das Verfahren ferner Folgendes umfasst:
Erhalten der Teilnehmereinrichtungsroutenauswahlrichtlinie, die vom Steuernetzwerkelement übertragen wird, wobei die Teilnehmereinrichtungsroutenauswahlrichtlinie durch Hinzufügen eines Erfassungsdatenparameters zu einem Verkehrsdeskriptorparameter einer voreingestellten Teilnehmereinrichtungsroutenauswahlrichtlinie erzeugt wird, und Schreiben der Adressinformationen des Zielnetzwerkelements und einer Art der Kommunikationssitzung für das Melden der Zielerfassungsdaten in den Verkehrsdeskriptorparameter.

2. Erfassungsdatenmeldeverfahren nach Anspruch 1, wobei das Aufbauen einer Kommunikationssitzung gemäß einer Teilnehmereinrichtungsroutenauswahlrichtlinie Folgendes umfasst:
Aufbauen der Kommunikationssitzung gemäß Adressinformationen des Zielnetzwerkelements, die in der Teilnehmereinrichtungsroutenauswahlrichtlinie umfasst sind; oder
Aufbauen der Kommunikationssitzung gemäß virtuellen Adressinformationen des Zielnetzwerkelements, die in der Teilnehmereinrichtungsroutenauswahlrichtlinie umfasst sind.

3. Erfassungsdatenmeldeverfahren nach Anspruch 1, wobei das Verfahren vor dem Erhalten der Teilnehmereinrichtungsroutenauswahlrichtlinie, die vom Steuernetzwerkelement übertragen wird, ferner Folgendes umfasst:
in einem Fall, in dem die Teilnehmereinrichtung eine Selbsterfassungsfähigkeit aufweist, Übertragen von ersten Erfassungsfähigkeitsidentifikationsinformationen zum Steuernetzwerkelement.

4. Verfahren nach Anspruch 3, wobei das Verfahren vor dem Übertragen der Erfassungsfähigkeitsidentifikationsinformationen zum Steuernetzwerkelement ferner Folgendes umfasst:
Anzeigen eines Aufforderungsdialogfeldes, wobei das Aufforderungsdialogfeld einen Aufforderungsbereich und einen Auswahlbereich umfasst und der Aufforderungsbereich zum Anfragen, ob das Hochladen von Erfassungsdaten unterstützt wird, verwendet wird; und
in Reaktion darauf, dass im Auswahlbereich eine Auswahloperation zum Unterstützen des Meldens von Erfassungsdaten empfangen wird, Durchführen eines Prozesses zum Übertragen der ersten Erfassungsfähigkeitsidentifikationsinformationen zum Steuernetzwerkelement.

5. Erfassungsdatenmeldeverfahren nach Anspruch 1, wobei das Melden von Zielerfassungsdaten beim Zielnetzwerkelement unter Verwendung der Kommunikationssitzung Folgendes umfasst:
Kapseln der Zielerfassungsdaten in ein Datenpaket gemäß der Teilnehmereinrichtungsroutenauswahlrichtlinie; und
Übertragen des Datenpakets zum Zielnetzwerkelement unter Verwendung der Kommunikationssitzung.

6. Erfassungsdatenmeldeverfahren nach Anspruch 1, wobei die Erfassungsdatenmeldeinformationen mindestens eines von einer Erfassungsdatenart, einer Meldehäufigkeit der Erfassungsdaten, einer maximalen Anzahl des Meldens der Erfassungsdaten, einer Meldestartzeit der Erfassungsdaten, einer Meldeendzeit der Erfassungsdaten oder einer Meldestartbedingung der Erfassungsdaten umfassen; und
das Verfahren umfasst ferner Folgendes: Erzeugen der Zielerfassungsdaten gemäß den Erfassungsdatenmeldeinformationen.

7. Erfassungsdatenmeldeverfahren nach Anspruch 6, wobei in einem Fall, in dem die Erfassungsdatenmeldeinformationen die Meldestartbedingung der Erfassungsdaten umfassen, und die Meldestartbedingung der Erfassungsdaten einen voreingestellten Schwellwert umfasst, das Erzeugen der Zielerfassungsdaten gemäß den Erfassungsdatenmeldeinformationen Folgendes umfasst:
in einem Fall, in dem die Teilnehmereinrichtung detektiert, dass Selbsterfassungsdaten den voreingestellten Schwellwert überschreiten, Erzeugen der Zielerfassungsdaten,
und wobei in einem Fall, in dem die Erfassungsdatenmeldeinformationen die Erfassungsdatenart umfassen und die Erfassungsdatenart Umgebungsereignisdaten umfasst, das Erzeugen der Zielerfassungsdaten gemäß den Erfassungsdatenmeldeinformationen Folgendes umfasst:
in einem Fall, in dem die Teilnehmereinrichtung die Umgebungsereignisdaten detektiert, Erzeugen der Zielerfassungsdaten,
und wobei in einem Fall, in dem die Erfassungsdatenmeldeinformationen die Meldehäufigkeit der Erfassungsdaten umfassen, das Erzeugen der Zielerfassungsdaten gemäß den Erfassungsdatenmeldeinformationen Folgendes umfasst:
Erzeugen der Zielerfassungsdaten gemäß der Meldehäufigkeit der Erfassungsdaten.

8. Erfassungsdatenmeldeverfahren nach Anspruch 1, wobei das Verfahren ferner Folgendes umfasst:
in einem Fall, in dem die Kommunikationssitzung zwischen der Teilnehmereinrichtung und dem Zielnetzwerkelement aufgebaut ist, Übertragen der Zielerfassungsdaten zum Zielnetzwerkelement unter Verwendung der Kommunikationssitzung.

9. Informationserzeugungsverfahren, das von einem Steuernetzwerkelement durchgeführt wird, wobei das Verfahren Folgendes umfasst:
Erzeugen (201) von Erfassungsdatenanforderungsinformationen, wobei die Erfassungsdatenanforderungsinformationen zum Anweisen einer Teilnehmereinrichtung, Zielerfassungsdaten zu melden, die von der Teilnehmereinrichtung gemäß den Erfassungsdatenmeldeinformationen erzeugt werden, verwendet werden;
Erzeugen (202) einer Teilnehmereinrichtungsroutenauswahlrichtlinie, wobei die Teilnehmereinrichtungsroutenauswahlrichtlinie zum Anweisen der Teilnehmereinrichtung, eine Kommunikationssitzung zum Melden von Erfassungsdaten aufzubauen, verwendet wird und wobei die Teilnehmereinrichtungsroutenauswahlrichtlinie Adressinformationen eines Zielnetzwerkelements umfasst, wobei das Zielnetzwerkelement ein Benutzerebenenfunktions(UPF)-Netzwerkelement oder ein Richtliniensteuerfunktions(PCF)-Netzwerkelement ist; und
Übertragen (203) der Erfassungsdatenanforderungsinformationen und der Teilnehmereinrichtungsroutenauswahlrichtlinie zur Teilnehmereinrichtung,
wobei das Erzeugen einer Teilnehmereinrichtungsroutenauswahlrichtlinie Folgendes umfasst:
Hinzufügen eines Erfassungsdatenparameters zu einem Verkehrsdeskriptorparameter einer voreingestellten Teilnehmereinrichtungsroutenauswahlrichtlinie und Schreiben der Adressinformationen des Zielnetzwerkelements und einer Art der Kommunikationssitzung für das Melden der Zielerfassungsdaten in den Verkehrsdeskriptorparameter, um die Teilnehmereinrichtungsroutenauswahlrichtlinie zu erhalten.

10. Informationserzeugungsverfahren nach Anspruch 9, das ferner Folgendes umfasst:
in einem Fall, in dem das Steuernetzwerkelement erste Erfassungsfähigkeitsidentifikationsinformationen empfängt, die von der Teilnehmereinrichtung übertragen werden, Bestimmen der Adressinformationen des Zielnetzwerkelements, dem die Teilnehmereinrichtung die Erfassungsdaten meldet.

11. Computerlesbares Speichermedium, auf dem ein Computerprogramm gespeichert ist, und wobei das Computerprogramm zum Laden durch einen Prozessor geeignet ist, um das Erfassungsdatenmeldeverfahren nach einem der Ansprüche 1 bis 8 oder das Informationserzeugungsverfahren nach einem der Ansprüche 9 und 10 durchzuführen.

12. Teilnehmereinrichtung, die einen Prozessor und einen Speicher umfasst, wobei im Speicher ein Computerprogramm gespeichert ist und wobei der Prozessor dazu ausgelegt ist, das im Speicher gespeicherte Computerprogramm aufzurufen, um das Erfassungsdatenmeldeverfahren nach einem der Ansprüche 1 bis 8 durchzuführen.

13. Steuernetzwerkelement, das einen Prozessor und einen Speicher umfasst, wobei im Speicher ein Computerprogramm gespeichert ist und wobei der Prozessor dazu ausgelegt ist, das im Speicher gespeicherte Computerprogramm aufzurufen, um das Informationserzeugungsverfahren nach einem der Ansprüche 9 und 10 durchzuführen.

## Revendications

1. Procédé de rapport de données de détection, effectué par un équipement utilisateur, le procédé comprenant :
l'obtention (101) d'informations de demande de données de détection transmises par un élément de réseau de contrôle, les informations de demande de données de détection comprenant des informations de rapport de données de détection, et les informations de demande de données de détection étant utilisées pour ordonner à l'équipement utilisateur de rapporter des données de détection cibles générées par l'équipement utilisateur selon les informations de rapport de données de détection ;
l'établissement (102) d'une session de communication selon une politique de sélection d'itinéraire d'équipement utilisateur dans le cas où la session de communication entre l'équipement utilisateur et un élément de réseau cible n'est pas établie ; et
le rapport (103) des données de détection cibles à l'élément de réseau cible à l'aide de la session de communication, les données de détection cibles étant des données de détection correspondant aux informations de rapport de données de détection, dans lequel l'élément de réseau cible est un élément de réseau de fonction de plan utilisateur, UPF, ou un élément de réseau de fonction de contrôle de politique, PCF,
dans lequel le procédé comprend en outre :
l'obtention de la politique de sélection d'itinéraire d'équipement utilisateur transmise par l'élément de réseau de contrôle, dans lequel la politique de sélection d'itinéraire d'équipement utilisateur est générée en ajoutant un paramètre de données de détection à un paramètre de descripteur de trafic d'une politique de sélection d'itinéraire d'équipement utilisateur prédéfinie, et l'écriture des informations d'adresse de l'élément de réseau cible et d'un type de la session de communication pour le rapport des données de détection cibles au paramètre de descripteur de trafic.

2. Procédé de rapport de données de détection selon la revendication 1, dans lequel l'établissement d'une session de communication selon une politique de sélection d'itinéraire d'équipement utilisateur comprend :
l'établissement de la session de communication selon des informations d'adresse de l'élément de réseau cible compris dans la politique de sélection d'itinéraire d'équipement utilisateur ; ou
l'établissement de la session de communication selon des informations d'adresse virtuelles de l'élément de réseau cible compris dans la politique de sélection d'itinéraire d'équipement utilisateur.

3. Procédé de rapport de données de détection selon la revendication 1, dans lequel, avant d'obtenir la politique de sélection d'itinéraire d'équipement utilisateur transmise par l'élément de réseau de contrôle, le procédé comprend en outre :
la transmission de premières informations d'identification de capacité de détection à l'élément de réseau de contrôle dans le cas où l'équipement utilisateur a une capacité d'autodétection.

4. Procédé selon la revendication 3, dans lequel, avant de transmettre les premières informations d'identification de capacité de détection à l'élément de réseau de contrôle, le procédé comprend en outre :
l'affichage d'une boîte de dialogue d'invite, dans lequel la boîte de dialogue d'invite comprend une zone d'invite et une zone de sélection, et la zone d'invite est utilisée pour demander si un téléchargement de données de détection est pris en charge ; et
la réalisation d'un processus de transmission des premières informations d'identification de capacité de détection à l'élément de réseau de contrôle en réponse à la réception dans la zone de sélection d'une opération de sélection pour prendre en charge un rapport de données de détection.

5. Procédé de rapport de données de détection selon la revendication 1, dans lequel le rapport des données de détection cibles à l'élément de réseau cible à l'aide de la session de communication comprend :
l'encapsulation des données de détection cibles dans un paquet de données selon la politique de sélection d'itinéraire d'équipement utilisateur ; et
la transmission du paquet de données à l'élément de réseau cible à l'aide de la session de communication.

6. Procédé de rapport de données de détection selon la revendication 1, dans lequel les informations de rapport de données de détection comprennent au moins un parmi un type de données de détection, une fréquence de rapport des données de détection, un nombre maximal de fois de rapport des données de détection, une heure de début de rapport des données de détection, une heure de fin de rapport des données de détection, ou une condition de début de rapport des données de détection ; et
le procédé comprend en outre : la génération des données de détection cibles selon les informations de rapport de données de détection.

7. Procédé de rapport de données de détection selon la revendication 6, dans lequel, dans le cas où les informations de rapport de données de détection comprennent la condition de début de rapport des données de détection et où la condition de début de rapport des données de détection comprend un seuil prédéfini, la génération des données de détection cibles selon les informations de rapport de données de détection comprend :
la génération des données de détection cibles dans le cas où l'équipement utilisateur détecte que des données d'autodétection dépassent le seuil prédéfini,
et dans lequel, dans le cas où les informations de rapport de données de détection comprennent le type de données de détection et où le type de données de détection comprend des données d'événement ambiant, la génération des données de détection cibles selon les informations de rapport de données de détection comprend :
la génération des données de détection cibles dans le cas où l'équipement utilisateur détecte les données d'événement ambiant,
et dans lequel, dans le cas où les informations de rapport de données de détection comprennent la fréquence de rapport des données de détection, la génération des données de détection cibles selon les informations de rapport de données de détection comprend :
la génération des données de détection cibles selon la fréquence de rapport des données de détection.

8. Procédé de rapport de données de détection selon la revendication 1, dans lequel le procédé comprend en outre :
la transmission des données de détection cibles à l'élément de réseau cible à l'aide de la session de communication dans le cas où la session de communication entre l'équipement utilisateur et l'élément de réseau cible est établie.

9. Procédé de génération d'informations effectué par un élément de réseau de contrôle le procédé comprenant :
la génération (201) d'informations de demande de données de détection, les informations de demande de données de détection étant utilisées pour ordonner à un équipement utilisateur de rapporter des données de détection cibles générées par l'équipement utilisateur selon les informations de rapport de données de détection ;
la génération (202) d'une politique de sélection d'itinéraire d'équipement utilisateur, la politique de sélection d'itinéraire d'équipement utilisateur étant utilisée pour ordonner à l'équipement utilisateur d'établir une session de communication pour le rapport de données de détection, et la politique de sélection d'itinéraire d'équipement utilisateur comprenant des informations d'adresse d'un élément de réseau cible, dans lequel l'élément de réseau cible est un élément de réseau de fonction de plan utilisateur, UPF, ou un élément de réseau de fonction de contrôle de politique, PCF ; et
la transmission (203) des informations de demande de données de détection et de la politique de sélection d'itinéraire d'équipement utilisateur à l'équipement utilisateur,
dans lequel la génération d'une politique de sélection d'itinéraire d'équipement utilisateur comprend :
l'ajout d'un paramètre de données de détection à un paramètre de descripteur de trafic d'une politique de sélection d'itinéraire d'équipement utilisateur prédéfinie, et l'écriture des informations d'adresse de l'élément de réseau cible et d'un type de la session de communication pour le rapport des données de détection cibles au paramètre de descripteur de trafic, de sorte à obtenir la politique de sélection d'itinéraire d'équipement utilisateur.

10. Procédé de génération d'informations selon la revendication 9, comprenant en outre :
la détermination des informations d'adresse de l'élément de réseau cible pour lequel l'équipement utilisateur effectue le rapport de données de détection dans le cas où l'élément de réseau de contrôle reçoit des premières informations d'identification de capacité de détection transmises par l'équipement utilisateur.

11. Support de stockage lisible par ordinateur sur lequel est stocké un programme informatique, le programme informatique étant adapté pour être chargé par un processeur pour effectuer le procédé de rapport de données de détection selon l'une des revendications 1 à 8 ou le procédé de génération d'informations selon l'une des revendications 9 et 10.

12. Équipement utilisateur comprenant un processeur et une mémoire, la mémoire stockant un programme informatique, et le processeur étant configuré pour invoquer le programme informatique stocké dans la mémoire pour effectuer le procédé de rapport de données de détection selon l'une des revendications 1 à 8.

13. Élément de réseau de contrôle comprenant un processeur et une mémoire, la mémoire stockant un programme informatique, et le processeur étant configuré pour invoquer le programme informatique stocké dans la mémoire pour effectuer le procédé de génération d'informations selon l'une des revendications 9 et 10.
